# EUROPÄISCHE PATENTSCHRIFT

(11) **EP 0 878 886 B1**
(45) Veröffentlichungstag und Bekanntmachung des Hinweises auf die Patenterteilung: **13.11.2002**
(21) Anmeldenummer: 98108060.9
(22) Anmeldetag: 04.05.1998
(51) Int. Cl.: H02B 1/24

(54) **Abschalteinrichtung für Serienstromkreise auf Flugplätzen**
Disconnection of series circuits in airports
Debranchement des circuits en série dans des aéroports

(30) Priorität: 16.05.1997 DE 19720733
(43) Veröffentlichungstag der Anmeldung: 18.11.1998
(73) Patentinhaber: SIEMENS AKTIENGESELLSCHAFT, 80333 München (DE)
(72) Erfinder: Boon, Julien, 1640 Sint-Genesius-Rode (BE); Vandevoorde, Jean-Claude, 1820 Steenkokkerzeel (BE)

(56) Entgegenhaltungen:
- DE-A- 3 436 573
- GB-A- 1 268 401

## Beschreibung

Die Erfindung bezieht sich auf eine Abschalteinrichtung für Serienstromkreise auf Flugplätzen, mit Eingangsklemmen, die an eine Stromquelle angeschlossen sind, Ausgangsklemmen, die an einen Serienstromkreis des Flugplatzes angeschlossen sind, und Anschlußelementen, mittels denen die Eingangsklemmen und die Ausgangsklemmen miteinander verbindbar sind.

Bei vorhandenen derartigen Einrichtungen ist es erforderlich, daß ein die Verbindung zwischen der Stromquelle und dem Serienstromkreis herstellender Stecker aus seiner Aufnahmeeinrichtung gezogen werden muß. Durch den Zustand, in dem der Stecker gezogen ist, und den weiteren Zustand, in dem der Stecker innerhalb der für ihn vorgesehenen Aufnahmeeinrichtung sitzt, sind zwei Betriebszustände definiert, nämlich einmal der Normalzustand, in dem der Serienstromkreis an die Stromquelle angeschlossen ist, und ein zweiter Zustand, in dem der Serienstromkreis von der Stromquelle getrennt ist. Darüber hinaus werden beim Ziehen eines derartigen Steckers zur Stromführung geeignete Leiter exponiert, woraus sich entsprechende Risiken für das Bedienungspersonal ergeben können.

Der Erfindung liegt die Aufgabe zugrunde, eine Abschalteinrichtung für Serienstromkreise auf Flugplätzen zur Verfügung zu stellen, die leichter handhabbar ist, höheren Sicherheitsanforderungen genügt und darüber hinaus eine größere Anzahl von leicht erkennbaren unterschiedlichen Betriebszuständen ermöglicht.

Diese Aufgabe wird erfindungsgemäß dadurch gelöst, daß die Abschalteinrichtung ein Stellglied aufweist, das in einer Normalposition die Anschlußelemente so positioniert, daß jede Eingangsklemme an eine Ausgangsklemme angeschlossen ist, in einer Wartungsposition die Anschlußelemente so positioniert, daß die Eingangsklemmen von den Ausgangsklemmen getrennt und mit einer Erdungsklemme verbunden sind und die Ausgangsklemmen miteinander und mit der Erdungsklemme verbunden sind, und in einer Prüfposition die Anschlußelemente so positioniert, daß die Eingangsklemmen von den Ausgangsklemmen getrennt und mit der Erdungsklemme verbunden sind und die Ausgangsklemmen miteinander und mit einer Prüfklemme verbunden sind. Erfindungsgemäß ergibt sich somit eine bei weitem erhöhte Funktionalität der vorstehend geschilderten Abschalteinrichtung im Vergleich zu den herkömmlichen, einen Stecker aufweisenden Abschalteinrichtungen. Erfindungsgemäß wird durch Betätigung des Stellglieds die Einstellung dreier unterschiedlicher Betriebszustände ermöglicht, wobei aufgrund der Position des Stellglieds unmittelbar ersichtlich ist, welcher Betriebszustand gerade vorliegt. In Normalposition des Stellglieds ist der Serienstromkreis ausschließlich an die Stromquelle angeschlossen. In der Wartungsposition des Stellglieds ist der Serienstromkreis von der Stromquelle getrennt und an Erde angeschlossen. In der Prüfposition des Stellglieds ist der Serienstromkreis sowohl von der Stromquelle als auch von Erde getrennt.

Die erfindungsgemäße Abschalteinrichtung hat als Bestandteil demgemäß einen Schutzschalter, der lediglich im Normalbetrieb, d.h. bei Normalposition des Stellglieds, aktiviert ist; dieser Schutzschalter unterbricht den Betrieb der ihm zugeordneten Stromquelle in allen von der Normalposition abweichenden Positionen des Stellglieds. Dieser Schutzschalter ermöglicht die Schaltung der Vorrichtung ausschließlich auf einen Stromkreis mit kleinster Belastung. Bei der erfindungsgemäßen Abschalteinrichtung ist sichergestellt, daß in keiner der drei Betriebsweisen Bedienungspersonal einem elektrischen Risiko ausgesetzt wird. Die Isolierung kann überprüft werden, ohne daß ein sich aufgrund der Stromquelle ergebendes Risiko vorliegt.

Zur weiteren Erhöhung der Sicherheit ist es vorteilhaft, wenn das Stellglied in der Normal-, der Wartungs- und der Prüfposition verriegelbar ist. Durch diese vorzugsweise mechanisch ausgestaltete Verriegelung kann beispielsweise in der Wartungsstellung des Stellglieds die Möglichkeit sicher ausgeschlossen werden, daß der Serienstromkreis unbeabsichtigt an Hochspannung angeschlossen wird, während Wartungspersonal bei der Arbeit ist.

Wenn die Anschlußelemente in der Wartungsposition des Stellglieds und in dessen Prüfposition so positioniert sind, daß sie die Eingangsklemmen aneinander anschließen, wird die Stromquelle, bei der es sich üblicherweise um eine Konstantstromquelle handelt, in allen Betriebszuständen mit Ausnahme des Normalbetriebs kurzgeschlossen, so daß eine Überprüfung der Konstantstromquelle ohne den Aufbau hoher Spannungen ermöglicht ist.

Zweckmäßigerweise ist die erfindungsgemäße Abschalteinrichtung so ausgestaltet, daß in ihr gespeicherte große Energie kapazitiv in den Serienstromkreis entladbar ist.

Die erfindungsgemäße Abschalteinrichtung wird aus einem Isolierkörper hergestellt, an dem die erforderlichen Kontakte und Anschlüsse zur Ausführung der vorstehend erläuterten Betriebsweise vorgesehen sind.

Im folgenden wird die Erfindung an Hand einer Ausführungsform unter Bezugnahme auf die Zeichnung näher erläutert. Es zeigen:
- FIG 1: eine prinzipielle Darstellung der erfindungsgemäßen Abschalteinrichtung, deren Stellglied sich in seiner Normalposition befindet;
- FIG 2: eine der FIG 1 entsprechende Darstellung, bei der das Stellglied seine Wartungsposition einnimmt; und
- FIG 3: eine den Figuren 1 und 2 entsprechende Darstellung, bei der sich das Stellglied in seiner Prüfposition befindet.

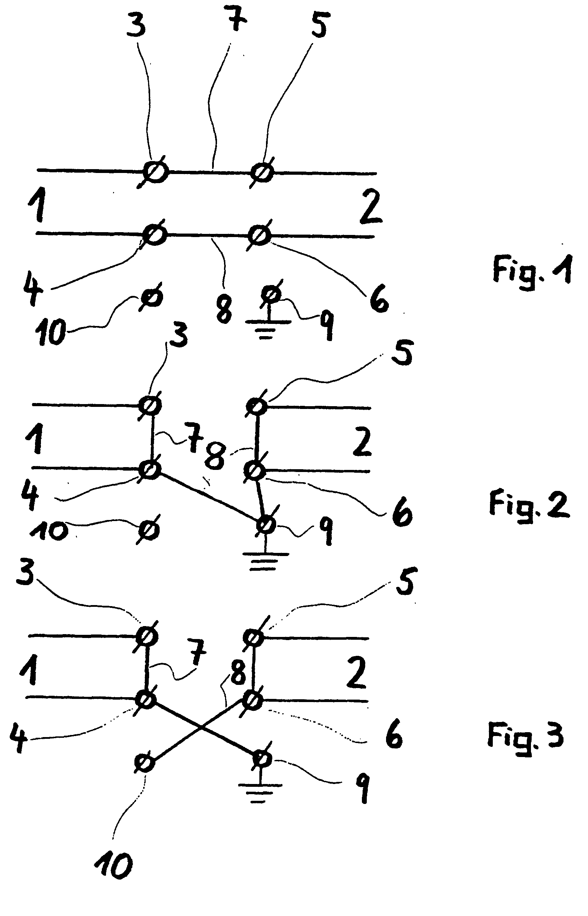

Eine in den Figuren 1 bis 3 in unterschiedlichen Stellungen prinzipiell dargestellte erfindungsgemäße Abschalteinrichtung dient dazu, eine Konstantstromquelle 1 mit einem Serienstromkreis 2 eines Flugplatzes zu verbinden oder die Konstantstromquelle 1 vom Serienstromkreis 2 zu trennen.

Hierzu weist die erfindungsgemäße Abschalteinrichtung zwei Eigangsklemmen 3, 4 und zwei Ausgangsklemmen 5, 6 auf, die mittels Anschlußelementen 7, 8 miteinander verbindbar bzw. voneinander trennbar sind. Des weiteren ist in der erfindungsgemäßen Abschalteinrichtung eine Erdungsklemme 9 sowie eine Prüfklemme 10 vorgesehen, welche mittels des Anschlußelements 8 mit dem Serienstromkreis 2 verbindbar sind.

Um die erfindungsgemäße Abschalteinrichtung in eine der in den Figuren 1 bis 3 dargestellte Position zu bringen, weist die erfindungsgemäße Abschalteinrichtung ein in den Figuren nicht dargestelltes Stellglied auf, mittels dem die Anschlußelemente 7, 8 verstellbar sind und das seinerseits in der in FIG 1 dargestellten Normalposition, der in FIG 2 dargestellten Wartungsposition und der in FIG 3 dargestellten Prüfposition verriegelbar ist.

In der in FIG 1 dargestellten Normalposition sind die Eingangsklemmen 3, 4 mittels der Anschlußelemente 7, 8 an die Ausgangsklemmen 5, 6 angeschlossen. Die Konstantstromquelle 1 ist mit dem Serienstromkreis 2 verbunden.

Bei der in FIG 2 dargestellten Wartungsposition sind die Eingangsklemmen 3, 4 miteinander und mit der Erdungsklemme verbunden, so daß die Konstantstromquelle 1 kurzgeschlossen ist. Die Ausgangsklemmen 5, 6 sind miteinander verbunden und an die Erdungsklemme 9 angeschlossen, so daß am Serienstromkreis 2 ohne jedwedes Risiko Wartungs- und Instandhaltungsarbeiten vorgenommen werden können.

Bei der in FIG 3 dargestellten Prüfposition ist die Konstantstromquelle 1 wie im Zusammenhang mit FIG 2 geschildert, kurzgeschlossen, wohingegen die Ausgangsklemmen 5, 6 untereinander und mit der Prüfklemme 10 verbunden sind, so daß am Serienstromkreis 2 Untersuchungen, Tests und dergleichen gefahrlos durchgeführt werden können.

## Patentansprüche

1. Abschalteinrichtung für Serienstromkreise (2) auf Flugplätzen, mit Eingangsklemmen (3,4), die an eine Stromquelle (1) angeschlossen sind, Ausgangsklemmen (5,6), die an einem Serienstromkreis(2) des Flugplatzes angeschlossen sind, und Anschlußelementen (7,8), mittels denen die Eingangsklemmen (3, 4) und die Ausgangsklemmen (5,6) miteinander verbindbar sind, **dadurch gekennzeichnet, daß** die Abschalteinrichtung ein Stellglied aufweist, das in einer Normalposition (FIG 1) die Anschlußelemente (7,8) so positioniert, daß jede Eingangsklemme (3,4) an einer Ausgangsklemme (5,6) angeschlossen ist, in einer Wartungsposition (FIG 2) die Anschlußelemente (7,8) so positioniert, daß die Eingangsklemmen (3,4) von den Ausgangsklemmen (5,6) getrennt und mit einer Erdungsklemme (9) verbunden sind und die Ausgangsklemmen (5,6) miteinander und mit der Erdungsklemme (9) verbunden sind, und in einer Prüfposition (FIG 3) die Anschlußelemente (7,8) so positioniert, daß die Eingangsklemmen (3,4) von den Ausgangsklemmen (5,6) getrennt und mit der Erdungsklemme (9) verbunden sind und die Ausgangsklemmen (5,6) miteinander und mit einer Prüfklemme (10) verbunden sind.

2. Abschalteinrichtung nach Anspruch 1, deren Stellglied in der Normal-, der Wartungs- und der Prüfposition verriegelbar ist.

3. Abschalteinrichtung nach Anspruch 1 oder 2, bei der die Anschlußelemente (7,8) in der Wartungsposition des Stelllieds so positioniert sind, daß sie die Eingangsklemmen (3,4) aneinander anschließen.

4. Abschalteinrichtung nach einem der Ansprüche 1 bis 3, bei der die Anschlußelemente (7,8) in der Prüfposition des Stellglieds so positioniert sind, daß sie die Eingangsklemmen (3, 4) aneinander anschließen.

5. Abschalteinrichtung nach einem der Ansprüche 1 bis 4, die so ausgebildet ist, daß in ihr gespeicherte große Energie kapazitiv in den Serienstromkreis (2) entladbar ist.

## Claims

1. Switch-off device for airport series circuits (2), having input terminals (3, 4) which are connected to a current source (1), output terminals (5, 6) which are connected to a series circuit (2) at the airport, and connecting elements (7, 8) by means of which the input terminals (3, 4) and the output terminals (5, 6) can be connected to one another, **characterized in that** the switch-off device has an actuator which in a normal position (Figure 1) positions the connecting elements (7, 8) in such a way that each input terminal (3, 4) is connected to an output terminal (5, 6), in a service position (Figure 2) positions the connecting elements (7, 8) in such a way that the input terminals (3, 4) are disconnected from the output terminals (5, 6) and are connected to an earth terminal (9), and the output terminals (5, 6) are connected to one another and to the earth terminal (9), and in a testing position (Figure 3) positions the connecting elements (7, 8) in such a way that the input terminals (3, 4) are disconnected from the output terminals (5, 6) and are connected to the earth terminal (9), and the output terminals (5, 6) are connected to one another and to a test terminal (10).

2. Switch-off device according to Claim 1, the actuator of which can be locked in the normal position, the service position and the testing position.

3. Switch-off device according to Claim 1 or 2, in which the connecting elements (7, 8) are positioned in the service position of the actuator in such a way that they connect the input terminals (3, 4) to one another.

4. Switch-off device according to one of Claims 1 to 3, in which the connecting elements (7, 8) are positioned in the testing position of the actuator in such a way that they connect the input terminals (3, 4) to one another.

5. Switch-off device according to one of Claims 1 to 4, which is constructed in such a way that the large amount of energy stored in it can be discharged capacitively into the series circuit (2).

## Revendications

1. Dispositif de coupure pour des circuits en série (2) dans des aéroports, comprenant des bornes d'entrée (3, 4) qui sont raccordées à une source de courant (1), comprenant des bornes de sortie (5, 6) qui sont raccordées à un circuit en série (2) de l'aéroport et comprenant des éléments de connexion (7, 8) au moyen desquels les bornes d'entrée (3, 4) et les bornes de sortie (5, 6) peuvent être reliées entre elles, **caractérisé par le fait que** le dispositif de coupure comporte un élément de positionnement qui, dans une position normale (figure 1), positionne les éléments de connexion (7, 8) de telle sorte que chaque borne d'entrée (3, 4) est raccordée à une borne de sortie (5, 6), qui, dans une position de maintenance (figure 2), positionne les éléments de connexion (7, 8) de telle sorte que les bornes d'entrée (3, 4) sont coupées des bornes de sortie (5, 6) et sont reliées à une borne de terre (9) et que les bornes de sortie (5, 6) sont reliées entre elles et à la borne de terre (9) et qui, dans une position de test (figure 3), positionne les éléments de connexion (7, 8) de telle sorte que les bornes d'entrée (3, 4) sont coupées des bornes de sortie (5, 6) et sont reliées à la borne de terre (9) et que les bornes de sortie (5, 6) sont reliées entre elles et à une home de test (10).

2. Dispositif de coupure selon la revendication 1, dont l'élément de positionnement peut être verrouillé dans la position normale, dans la position de maintenance et dans la position de test.

3. Dispositif de coupure selon la revendication 1 ou 2, dans lequel, lorsque l'élément de positionnement est dans la position de maintenance, les éléments de connexion (7, 8) sont positionnés de telle sorte qu'ils raccordent les bornes d'entrée (3, 4) l'une à l'autre.

4. Dispositif de coupure selon l'une des revendications 1 à 3, dans lequel, lorsque l'élément de positionnement est dans la position de test, les éléments de connexion (7, 8) sont positionnés de telle sorte qu'ils raccordent les bornes d'entrée (3, 4) l'une à l'autre.

5. Dispositif de coupure selon l'une des revendications 1 à 4, qui est conçu de telle sorte que la grande énergie qu'il emmagasine peut être déchargée de manière capacitive dans le circuit en série (2).
